# FASCICULE DE BREVET EUROPEEN

(11) **EP 2 863 275 B1**
(45) Date de publication et mention de la délivrance du brevet: **24.07.2019**
(21) Numéro de dépôt: 13188770.5
(22) Date de dépôt: 15.10.2013
(51) Int. Cl.: G01L 19/12

(54) **Capteur de pression**
Drucksensor
Pressure sensor

(43) Date de publication de la demande: 22.04.2015
(73) Titulaire: The Swatch Group Research and Development Ltd., 2074 Marin (CH)
(72) Inventeur: Poli, Gian-Carlo, 2206 Les Geneveys-sur-Coffrane (CH)
(74) Mandataire: Ravenel, Thierry Gérard Louis

(56) Documents cités:
- DE-B- 1 133 456
- JP-A- S60 181 678
- US-A- 2 769 070

## Description

### Domaine de l'invention

La présente invention concerne le domaine technique des dispositifs de mesure de la pression et plus particulièrement l'invention concerne un capteur de pression comportant des moyens de détection de la pression utilisant la progression d'un liquide dans un volume fermé lorsque ledit capteur est soumis à une pression extérieure. Elle concerne aussi un appareil barométrique comportant un capteur de pression, dans lequel l'information de pression détectée par le capteur est transmise, puis par exemple affichée dans l'appareil à l'aide d'un dispositif indicateur et/ou utilisée pour commander une action prédéterminée. L'appareil barométrique peut être notamment inclus dans un objet portable de petites dimensions tel qu'une montre-bracelet.

### Arrière-plan technologique de l'invention

Des montres bracelets équipées d'un dispositif de mesure de la pression sont déjà connues. De telles montres bracelets, par exemple des montres de plongée, comprennent classiquement un capteur de pression par exemple du type membrane dont les déformations varient en fonction des fluctuations de la pression rencontrées lors de plongées. Dans un mode de réalisation connu, la variation des déformations du capteur de pression sous l'effet des fluctuations de la pression est transformée en un déplacement linéaire d'un palpeur qui lui-même commande le pivotement d'une bascule. Le mouvement de pivotement de la bascule est à son tour transformé en un mouvement de rotation d'un train d'engrenages qui engrène avec une roue d'affichage selon un rapport d'entraînement calculé de façon qu'une aiguille d'indication de pression portée par la roue d'affichage fournisse au porteur de la montre une indication de pression lisible.

Les constructions du genre de celle brièvement décrite ci-dessus sont typiquement utilisées pour fournir au porteur de la montre une indication de la pression lors d'une plongée.

Ces dispositifs mécaniques de mesure et d'affichage de la pression sont relativement complexes et délicats à mettre en oeuvre compte tenu du grand nombre de pièces mécaniques qu'ils comprennent. En outre ils nécessitent de prévoir une communication entre l'extérieur du boîtier de la montre et l'intérieur de ce dernier où est monté le dispositif ce qui entraîne des arrangements complexes si l'on souhaite garantir une étanchéité fiable de la montre en toutes circonstances. Ces facteurs rendent donc difficile la production de montres équipées de dispositifs mécaniques de mesure et d'affichage de la pression de manière économique.

DE 11 33 456 décrit deux fils conducteurs 17 et 18 coopérant respectivement avec la partie supérieure et la partie inférieure d'un revêtement conducteur 16 localisé sur la paroi d'un tube capillaire. Le déplacement du liquide le long du revêtement fait varier la résistance entre les deux fils conducteurs et donc la pression mesurée.

L'invention a donc pour but principal de fournir un capteur de pression simple et économique à mettre en oeuvre.

L'invention a également pour but de fournir un capteur de pression dont la structure lui permette d'être facilement intégré dans un objet portable de petites dimensions et notamment dans une montre sans affecter son étanchéité.

### Résumé de l'invention

A cet effet et selon un premier aspect, l'invention concerne un capteur de pression selon la revendication 1.

Selon une caractéristique particulière, le volume fermé comprend une première partie formant le réservoir et une deuxième partie formant le capillaire, le liquide étant contenu dans le réservoir en l'absence de pression et se déplaçant du réservoir vers et dans le capillaire sous l'effet de la pression.

Selon une autre caractéristique particulière, l'organe détecteur est disposé le long du capillaire. Ainsi l'organe détecteur détecte le liquide qui avance dans le capillaire lorsqu'une pression est exercée sur le réservoir.

De préférence, le capteur de pression comporte, en outre, un premier substrat et un deuxième substrat superposés, un cadre de scellement réunissant les premier et deuxième substrats pour définir entre eux ledit volume fermé.

Selon un deuxième aspect, l'invention concerne un appareil barométrique comportant un capteur de pression selon le premier aspect de l'invention.

Outre le capteur de pression de l'invention, l'appareil comporte :
- au moins un dispositif indicateur,
- un circuit électrique comprenant un circuit d'interface de commande du dispositif indicateur destiné à transmettre ledit signal électrique relatif à la pression jusqu'audit dispositif indicateur, et
- au moins une source d'alimentation dudit circuit électrique.

Selon un troisième aspect, l'invention concerne une pièce d'horlogerie comportant un appareil de mesure de pression selon le deuxième aspect de l'invention.

De manière préférée, le réservoir et le capillaire du capteur de pression s'étendent suivant une direction sensiblement circulaire, ce qui permet avantageusement de le loger sous la glace de la pièce d'horlogerie ou dans la lunette de la pièce d'horlogerie.

Selon un mode de réalisation particulier, le dispositif indicateur comprend un écran d'affichage et/ou un générateur sonore et/ou un générateur de lumière associé au capteur de pression et en particulier au circuit électrique de ce dernier.

### Description des figures

L'invention sera mieux comprise à la lecture de la description détaillée qui va suivre d'un mode de réalisation particulier, fourni à titre indicatif et nullement limitatif, et illustré au moyen des dessins annexés, dans lesquels :
- la figure 1 représente, en vue de dessus, une pièce d'horlogerie dotée d'un capteur de pression logé sous sa glace, conformément à un premier mode de réalisation de l'invention ;
- la figure 2 est une vue en coupe transversale selon la ligne A-A de la figure 1, illustrant une première variante d'exécution ;
- les figures 3 et 4 représentent, respectivement en vue en perspective supérieure et en vue de dessus, un capteur de pression logé dans une lunette de pièce d'horlogerie, conformément à un deuxième mode de réalisation de l'invention ;
- les figures 5 à 7 sont des vues en coupe transversale partielle, prises respectivement suivant les lignes I-I, II-II et III-III de la figure 4, montrant l'agencement du capteur de pression à l'intérieur de la lunette.

### Description détaillée de modes de réalisation particuliers

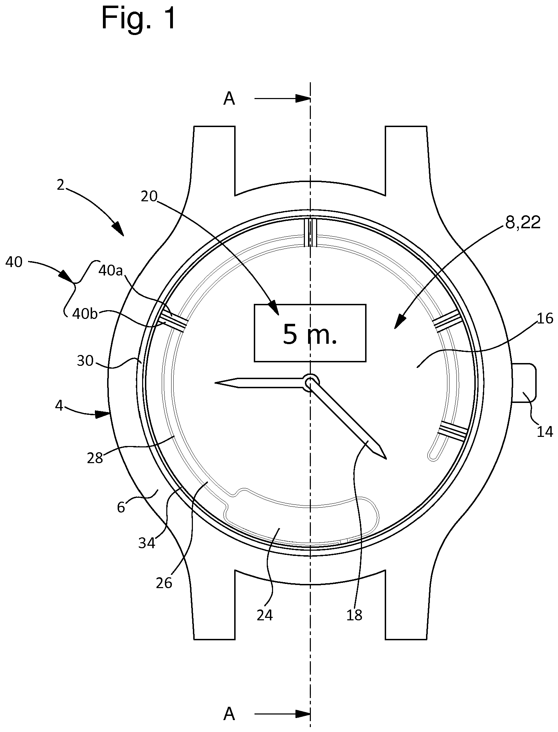

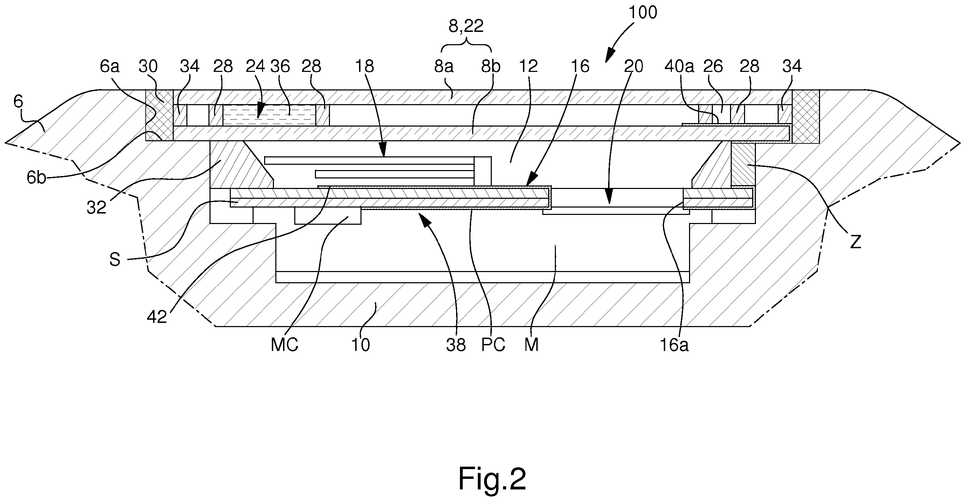

En se référant tout d'abord aux figures 1 et 2, il est représenté un appareil de mesure de pression 100 par exemple de type profondimètre, qui se présente sous la forme d'une pièce d'horlogerie 2 de type montre-bracelet. La pièce d'horlogerie 2 comprend de manière habituelle une boîte 4, comprenant une carrure 6, une glace 8 et un fond 10 délimitant un espace 12 destiné à recevoir un mouvement M. (Figure 2). La montre comprend également une couronne de remontoir 14, un cadran 16, des aiguilles 18.

La pièce d'horlogerie 2, qui est aussi, dans cet exemple, un appareil de mesure de pression 100, comporte un dispositif indicateur 20 de la profondeur, par exemple sous la forme d'un dispositif d'affichage à cristal liquide, et un capteur de pression 22.

Dans l'exemple de la figure 1, le capteur de pression 22 joue également le rôle de la glace 8, qui se présente, ici, sous la forme d'un ensemble de verre ou d'un matériau synthétique au moins partiellement transparent qui recouvre classiquement la totalité du cadran 16.

Le capteur de pression 22 comporte un volume fermé réalisé en deux parties successives. L'une des deux parties se présente sous la forme d'un réservoir 24 tandis que l'autre partie se présente sous la forme d'un tube capillaire 26 fermé à une de ses extrémités et communiquant à son autre extrémité avec le réservoir 24.

Le volume fermé constitué par le réservoir 24 et le capillaire 26 est délimité par un substrat supérieur 8a et un substrat inférieur 8b formant la glace 8. Les substrats inférieur et supérieur 8a, 8b sont réunis à la manière d'une cellule à cristal liquide par un cadre de scellement 28 au contour fermé et dont la forme définit les dimensions du réservoir 24 et du capillaire 26.

Les substrats 8a, 8b se présentent sous la forme d'un disque ayant un diamètre extérieur sensiblement identique à celui d'une ouverture supérieure 6a de la carrure 6. Un joint 30 est avantageusement placé dans l'ouverture 6a entre la carrure 6 et l'ensemble capteur de manière à fixer classiquement ledit ensemble sur la boîte de montre de manière étanche, cet ensemble reposant sur un épaulement 6b ménagé dans la carrure 6. Un réhaut 32 permet de maintenir la glace 8 à distance du cadran 16.

Le capteur 22 comporte également un cadre de scellement extérieur 34 disposé entre les bords périphériques des substrats 8a, 8b.

Le cadre de scellement 28 sert d'entretoise entre les substrats supérieur 8a et inférieur 8b. Les substrats formant le capteur sont réalisés en un matériau isolant. Dans l'exemple illustré, dans lequel le capteur est intégré à une pièce d'horlogerie au-dessus de ses moyens d'affichage et forme la glace 8, les substrats supérieur 8a et inférieur 8b sont réalisés dans un matériau transparent, et arrangés de manière à permettre la lecture des informations classiques d'affichage horaire de la pièce d'horlogerie 2.

Les substrats 8a et 8b présentent une épaisseur telle qu'ils peuvent fléchir au moins dans leur région située au-dessus du réservoir 24. Typiquement l'épaisseur de ces substrats au moins dans la région du réservoir est de l'ordre de 0.1 mm. Ainsi avec un réservoir présentant en projection dans le plan du substrat une surface de 150 mm² et avec un capillaire présentant en projection dans le plan du substrat une surface de 70 mm², une gamme de pressions de 1 à 6 bars peut être détectée, la section du capillaire étant typiquement de l'ordre de 0.1 mm²

Selon une variante préférée, le substrat supérieur 8a présente une épaisseur moindre que le substrat inférieur 8b de manière que le substrat supérieur exposé à la pression puisse fléchir indépendamment du substrat inférieur 8b. On obtient ainsi une meilleure réponse à la variation de pression tout en conservant une stabilité mécanique de l'ensemble compatible avec les exigences de résistance et de rigidité d'une glace horlogère.

A titre d'exemple, un matériau transparent convenable peut être le verre, une matière plastique ou encore le saphir.

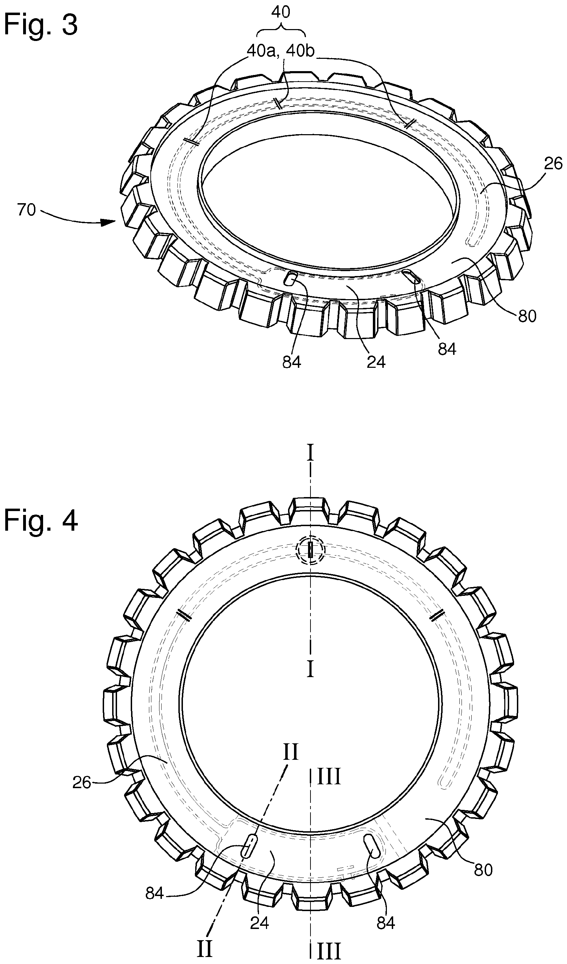

Selon une variante dans laquelle le capteur n'est pas intégré au-dessus d'un moyen d'affichage, par exemple lorsque le capteur est intégré dans une lunette de montre, comme cela est illustré aux figures 3 à 7 qui seront décrites plus en détail ci-après, les substrats supérieur 8a et inférieur 8b pourront être réalisés en un matériau opaque, par exemple, en matière plastique ou en céramique opaque.

Dans le mode de réalisation illustré aux figures 3 et 4, le réservoir 24 et le capillaire 26 sont agencés suivant une direction sensiblement circulaire, de telle manière que le capteur 22 soit inséré dans la pièce d'horlogerie 2. Une configuration du réservoir et du capillaire selon une direction rectiligne ou tout autre configuration non rectiligne et non circulaire peut naturellement être envisagée.

Le capteur 22 de l'invention comprend en outre un liquide 36 conducteur de l'électricité. Un liquide particulièrement adapté pour ses propriétés de conductivité électrique peut être par exemple l'eau minéralisée, le mercure ou tout autre liquide conducteur de l'électricité. Ce liquide 36 est emprisonné dans le volume fermé constitué par le réservoir 24 et le capillaire 26.

Lorsque l'appareil de mesure de pression 100 est à la pression atmosphérique, le liquide 36 est entièrement compris dans le réservoir 24 (figure 1). Lorsque l'appareil de mesure de pression 100 est soumis à une pression due à la profondeur, cette pression s'exerce sur le réservoir 24, sur la totalité de la surface en projection sur le substrat de celui-ci. Le substrat supérieur 8a fléchit au moins localement dans sa région située proche du réservoir 24. Le liquide 36 est alors chassé du réservoir 24 et se déplace dans le capillaire 26.

Plus la pression exercée est importante, et plus la distance parcourue par le liquide 36 dans le capillaire 26 est grande. Il est donc possible de déterminer la valeur de la pression exercée sur l'appareil de mesure de pression 100 en mesurant la distance parcourue par le liquide 36 dans le capillaire 26. A cet effet, le capteur de pression 22 comporte, en outre, des moyens de détection et de transformation pour détecter la présence du liquide 36 dans le capillaire 22 et la transformer en une information aisément compréhensible par un utilisateur.

Selon une caractéristique de l'invention, le liquide 36 est électriquement conducteur. Le liquide 36 coopère avec les moyens de détection et de transformation qui comprennent un circuit électrique 38 et au moins un organe détecteur 40 placé sur ledit circuit électrique (figure 2). De manière avantageuse, le circuit électrique 38 avec ses divers composants (source d'énergie, pistes conductrices PC, contacteur de type zébra Z, microcontrôleur interface utilisateur MC, afficheur 20) est porté par un substrat S disposé sous le cadran 16. Selon une variante, le circuit électrique 38 peut être relié au circuit de commande du mouvement horloger M et présenter des composants communs avec ce dernier.

L'organe détecteur 40 comporte au moins une paire d'électrodes 40a, 40b. La ou les paires d'électrodes sont disposées sur la face du substrat supérieur 8a et/ou du substrat inférieur 8b qui est en contact avec le liquide 36 le long du capillaire 26. Typiquement, les électrodes sont réalisées dans un matériau tel que l'oxyde d'indium étain (ITO), qui présente l'avantage d'être électriquement conducteur et optiquement transparent. D'autres possibilités existent pour réaliser ces électrodes, par exemple des des nano-fils conducteurs (Ag nano-wires) ou d'autres matériaux conducteurs en couches suffisamment minces pour ne pas être visibles.

Sous l'effet de la pression exercée sur la surface du capteur le liquide 36 est chassé du réservoir 24, avance dans le capillaire 26. Lorsque le liquide 36 arrive en contact avec un organe détecteur 40, il établit un contact électrique entre les électrodes 40a, 40b de la paire d'électrodes, du fait de sa conductivité électrique, et ferme ainsi le circuit électrique de détection 38. Un signal électrique est alors transmis à un circuit d'interface de commande d'un dispositif indicateur 20 qui signale à l'utilisateur qu'un premier seuil de pression a été franchi. Lorsque le liquide 36 arrive en contact de l'organe détecteur 40 suivant le long du capillaire 26, un contact électrique est à nouveau fermé et un deuxième signal électrique est alors transmis au circuit d'interface de commande d'un dispositif indicateur qui signale à l'utilisateur qu'un second seuil de pression a été franchi et ainsi de suite.

Les électrodes de la paire d'électrode 40a, 40b sont disposées soit de manière juxtaposée sur le substrat supérieur 8a ou le substrat inférieur 8b (figure 1) soit réparties l'une en regard de l'autre entre le substrat supérieur 8a et le substrat inférieur 8b (non représenté).

Ainsi, en agençant les organes détecteurs 40 à des distances appropriées, les uns des autres le long du capillaire 26, il est possible, non seulement de détecter la pression exercée sur le réservoir 24, mais aussi de la quantifier et/ou de déterminer le franchissement de seuils successifs de pression. Typiquement les organes détecteurs sont espacés les uns des autres d'une distance permettant de donner des informations de relatives à des paliers pour des plongeurs.

L'information relative à la pression est donc transformée en un signal électrique qui est transmis au moyen d'une piste conductrice au circuit d'interface de commande d'un dispositif indicateur, par exemple un dispositif d'affichage 20.

La figure 2 montre une variante de réalisation dans laquelle le dispositif indicateur est un dispositif d'affichage 20 agencé sous le cadran 16 et visible à travers une fenêtre 16a ménagée dans le cadran 16.

Le dispositif d'affichage 20 fournit non seulement une indication du fait qu'une pression est exercée, mais peut fournir aussi une valeur numérique représentative de cette pression, cette valeur numérique pouvant changer, au fur et à mesure que le liquide 36 parcourt le capillaire 26 et coopère avec les organes détecteurs 40 successifs.

De manière préférée, le dispositif d'affichage 20 de la profondeur se présente sous la forme, connue en soi, d'un dispositif d'affichage numérique comportant une cellule à cristal liquide qui permet l'affichage de caractères alphanumériques, aussi de taille aisément lisible sous l'eau. Un rétro-éclairage peut bien sûr être enclenché afin de faciliter la lecture de l'afficheur si la luminosité est faible. Sur l'exemple illustré à la figure 1, l'information affichée est une profondeur de 5 mètres, due à la pression exercée sur l'appareil de mesure de pression et mesurée par le capteur de pression 30.

A titre de variante, le dispositif indicateur 20 visuelle comme il vient d'être décrit peut être remplacé ou associé à un autre type d'indicateur comme un générateur sonore, un vibreur et/ou un générateur de lumière. Par exemple, dans le cadre d'une montre de plongée comprenant un dispositif d'éclairage du cadran le dispositif d'éclairage pourra être automatiquement enclenché dès que le capteur de l'invention détecte le franchissement d'un seuil de pression représentatif d'une profondeur déterminée.

De manière connue en soi, et de façon avantageuse, le circuit électrique 38 peut être alimenté par au moins une cellule solaire 42 agencée de manière appropriée sur le cadran 16 pour recevoir au mieux la lumière. Cette cellule solaire peut fournir de l'énergie qui sera stockée dans un élément de stockage d'énergie (accumulateur, super capacité, etc...) pour pouvoir ensuite alimenter le circuit électrique même s'il n'y a plus de lumière sur la cellule solaire 42.

Les figures 3 à 7 illustrent un autre mode de réalisation de l'invention, dans lequel un capteur de pression 22 n'est pas formé par la glace de la pièce d'horlogerie, mais est intégré dans une lunette 70 d'une pièce d'horlogerie. De manière connue en soi, la lunette 70 se présente sous la forme d'un anneau cranté agencé sur la carrure de la pièce d'horlogerie et apte à tourner par rapport à celle-ci.

La lunette 70 comporte un logement annulaire 72 s'étendant transversalement à partir de sa face supérieure et dans lequel est logé un capteur de pression 22 analogue à celui qui a été décrit en référence aux figures 1 et 2. Le capteur de pression 22 comporte un réservoir 24 et un capillaire 26, qui s'étendent suivant une direction sensiblement circulaire et sont compris dans un espace fermé délimité par un substrat supérieur 74, un substrat inférieur 76 qui sont réunis par un cadre de scellement 78. Un cadre de scellement extérieur et intérieur 78a et 78b circulaires sont prévus sur la totalité du périmètre du capteur 22 pour le renforcer mécaniquement.

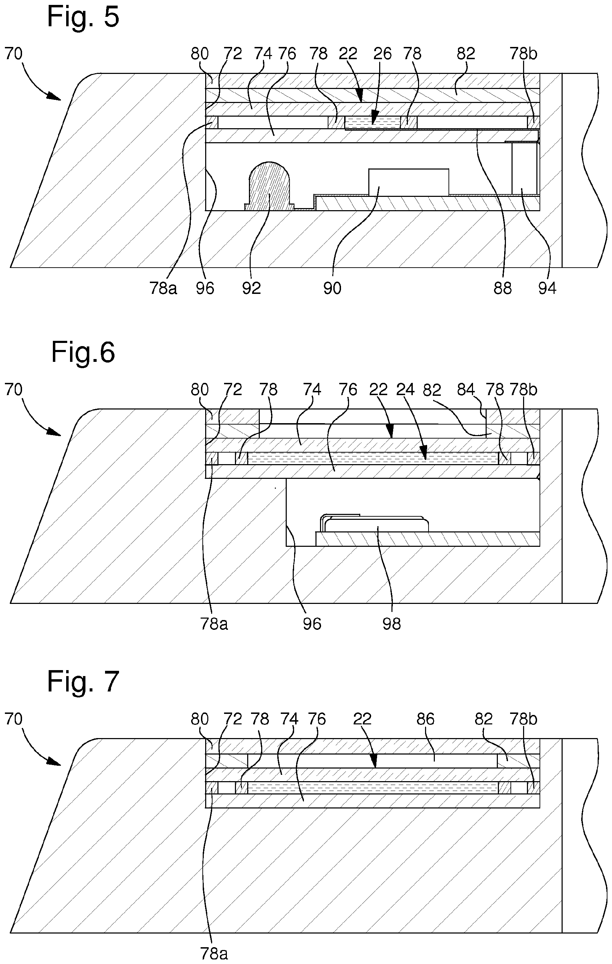

Le substrat supérieur 74 est surmonté par une couche de protection 80 et par une couche de masquage 82. La couche de masquage est interrompue dans la zone se trouvant au-dessus du réservoir 24 (figures 6 et 7). La couche de protection 80 comprend deux trous 84 également disposés au-dessus du réservoir 24 de façon à permettre à une pression par exemple via un liquide de s'exercer directement sur la partie du substrat supérieur 74 du capteur disposé en regard du réservoir 24 et ainsi d'agir sur le substrat 74 à cet endroit.

Un espace vide 86 est donc ménagé entre le substrat supérieur 74 et la couche de protection 80 dans la zone du réservoir comme cela visible à la figure 7. L'espace 86 et les ouvertures 84 permettent à une pression extérieure de s'exercer sur toute la surface du réservoir 32, et de chasser le liquide 36 dans le capillaire 34, d'une manière analogue à ce qui a été décrit pour le mode de réalisation précédent (figures 1 et 2).

Cet agencement est particulièrement visible sur la figure 5 qui est une coupe transversale de la lunette 70 au niveau du capillaire 26 (ligne I-I de la figure 4), sur la figure 6 qui est une coupe transversale de la lunette 70 au niveau de l'un des trous 84 (ligne II-II de la figure 4), et sur la figure 7 qui est une coupe transversale de la lunette 70 au niveau du réservoir 24 (ligne III-III de la figure 4).

Comme le montre plus particulièrement les figures 3 et 5, des organes détecteurs 40, en l'occurrence la paire d'électrode en ITO 40a, 40b, sont disposés sur le substrat inférieur 76 à des emplacements appropriés dans la zone du capillaire 26 et en contact avec le liquide conducteur 36 emprisonné dans le volume défini par les substrats supérieur et inférieur et le cadre de scellement 78. Les électrodes 40a, 40b sont reliées à une piste conductrice 88 disposée partiellement sur le substrat inférieur 76 (figures 5 et 6) et menant à un circuit d'interface 90 de commande d'un dispositif indicateur 92 via un contacteur de type zébra 94, disposé dans un dégagement 96 ménagé sous le capteur 22. Dans l'exemple illustré le dispositif indicateur est une LED visible à travers les substrats 74, 76 et la couche de protection 80. Le circuit 90 est alimenté par une pile 98 (figure 6).

Comme décrit en liaison avec le mode de réalisation de la figure 1 lorsque le liquide conducteur 36 progresse dans le capillaire 26 jusqu'à l'un de ces organes détecteurs 40, le circuit électrique est fermé entre l'organe détecteur 40 et la piste conductrice 88. Celle-ci se prolonge jusque sous le substrat inférieur 76 où elle communique avec un circuit imprimé qui permet de transmettre l'information jusqu'à un dispositif récepteur (non représenté) agencé dans la pièce d'horlogerie. Ledit dispositif récepteur peut être un dispositif d'affichage de la valeur de pression, comme dans l'exemple du premier mode de réalisation, ou un dispositif de détection automatique de franchissement de seuils de pression.

Dans l'exemple illustré à la figure 3, les électrodes 40a, 40b des organes détecteurs 40 sont disposées côte à côte_ce qui permet lors de la fabrication de ne traiter qu'un seul des substrats 74 ou 76.

L'invention n'est pas limitée au mode de réalisation particulier qui vient d'être décrit. Notamment, lorsque l'appareil de mesure de pression n'est pas une pièce d'horlogerie, le capteur de pression peut s'étendre suivant une direction non circulaire, par exemple une direction sensiblement linéaire. L'alimentation électrique pourrait être différente d'une alimentation par pile ou cellule solaire. Le dispositif d'affichage pourrait être différent d'écrans à cristaux liquides.

Notamment, le circuit électrique du dispositif de mesure de pression pourrait être distinct du circuit électrique de la pièce d'horlogerie.

Notamment, la répartition des organes détecteurs sur l'un ou l'autre des substrats pourrait être différente. De manière analogue, la piste électrique pourrait être agencée sur le substrat supérieur et non sur le substrat inférieur.

## Revendications

1. Capteur de pression (22), comportant des moyens (40) de détection de la pression et de transformation de la pression en un signal électrique apte à être transmis par un circuit électrique à un circuit d'interface de commande d'un dispositif indicateur, **caractérisé en ce que** lesdits moyens (40) de détection et de transformation comprennent :
- un volume fermé (24, 26) et un liquide (36) contenu dans le volume fermé, ledit liquide (36) étant électriquement conducteur et apte à se déplacer dans ledit volume fermé (24, 26),
- au moins un organe détecteur (40) disposé dans le volume fermé (24, 26) à une position donnée dans ledit volume, **caractérisé en ce que** ledit organe détecteur (40) comprenant au moins une paire d'électrodes (40a, 40b) et coopérant avec le liquide (36) lorsque celui-ci se déplace dans le volume fermé (24, 26), de telle façon que ledit circuit électrique est fermé lorsque le liquide (36) passe au regard dudit organe détecteur (40).

2. Capteur de pression (22) selon la revendication 1, **caractérisé en ce que** le volume fermé (24, 26) comprend une première partie formant réservoir (24) et une deuxième partie formant capillaire (26), le liquide (36) étant contenu dans le réservoir (24) en l'absence de pression et se déplaçant du réservoir (24) dans le capillaire (26) sous l'effet de la pression.

3. Capteur de pression (22) selon la revendication 2, dans lequel ledit au moins organe détecteur (40) est disposé le long du capillaire (26).

4. Capteur de pression (30) selon la revendication 2 ou 3, dans lequel le réservoir (24) et le capillaire (26) se succèdent suivant une direction sensiblement circulaire.

5. Capteur de pression 22) selon l'une quelconque des revendications 2 à 4, **caractérisé en ce qu'**il comporte plusieurs organes détecteurs (40) disposés successivement le long du capillaire (26) à des distances déterminées les unes des autres.

6. Capteur de pression (22) selon l'une quelconque des revendications 1 à 5, dans lequel chaque organe détecteur (40) comporte une paire d'électrodes (40a, 40b) disposée dans le même plan.

7. Capteur de pression (22) selon l'une quelconque des revendications 1 à 6, **caractérisé en ce qu'**il comporte, en outre, un premier substrat (8a, 74) et un deuxième substrat (8b, 76) superposés, un cadre de scellement (28, 78) réunissant les premier et deuxième substrats 8 pour définir entre eux ledit volume fermé.

8. Capteur de pression (22) selon la revendication 7, **caractérisé en ce que** chaque organe détecteur (40) est porté par l'un ou l'autre desdits substrats (8a, 8b, 74, 76).

9. Capteur de pression (22) selon la revendication 8, **caractérisé en ce que** tous les organes détecteurs (40) sont portés par le même substrat (8b, 76).

10. Capteur de pression (22) selon l'une quelconque des revendications 1 à 9, **caractérisé en ce que** lesdits moyens (40) de détection et de transformation comprennent, en outre, une piste électrique destinée à coopérer avec ledit organe détecteur (40) et ledit liquide (36).

11. Capteur de pression (22) selon l'une quelconque des revendications 1 à 10, **caractérisé en ce que** le substrat supérieur 8a présente une épaisseur moindre que le substrat inférieur 8b de manière que le substrat supérieur soit plus sensible lorsqu'exposé à la pression.

12. Appareil de mesure de pression (100), **caractérisé en ce qu'**il comporte un capteur de pression (30) selon l'une quelconque des revendications 1 à 11.

13. Appareil de mesure de pression (100) selon la revendication 12, **caractérisé en ce qu'**il comporte, en outre :
- un dispositif indicateur (20),
- un circuit électrique (38) comprenant un circuit d'interface de commande dudit dispositif indicateur destiné à recevoir ledit signal électrique relatif à la pression et à le retransmettre jusqu'audit dispositif indicateur (20), et
- au moins une source d'alimentation dudit circuit électrique.

14. Pièce d'horlogerie (2), **caractérisée en ce qu'**elle comporte un appareil de mesure de pression (100) selon l'une quelconque des revendications 10 à 13.

15. Pièce d'horlogerie (2) selon la revendication 14, ladite pièce d'horlogerie étant dotée d'une glace (18), dans laquelle ledit capteur de pression (30) est intégré.

16. Pièce d'horlogerie (2) selon la revendication 15, **caractérisée en ce que** ladite glace forme un des substrats dudit capteur de pression.

17. Pièce d'horlogerie (2) selon la revendication 14, ladite pièce d'horlogerie étant dotée d'une lunette dans laquelle ledit capteur de pression (22) est logé (70).

18. Pièce d'horlogerie (2) selon l'une des revendications 14 à 17, **caractérisée** en en ce que ledit dispositif indicateur comprend un écran d'affichage et/ou un vibreur et/ou un générateur sonore et/ou un générateur de lumière.

## Patentansprüche

1. Drucksensor (22), umfassend Mittel (40) zum Erfassen des Drucks und zum Umwandeln des Drucks in ein elektrisches Signal, das durch einen elektrischen Schaltkreis an eine Steuerschnittstellenschaltung einer Anzeigevorrichtung übertragbar ist, **dadurch gekennzeichnet, dass** die Erfassungs- und Umwandlungsmittel (40) umfassen:
- einen geschlossenen Rauminhalt (24, 26) und eine in dem geschlossenen Rauminhalt enthaltene Flüssigkeit (36), die elektrisch leitfähig ist und in dem geschlossenen Rauminhalt (24, 26) verlagerbar ist,
- mindestens ein Detektorelement (40), das in dem geschlossenen Rauminhalt (24, 26) an einer vorgegebenen Position in dem Rauminhalt angeordnet ist, **dadurch gekennzeichnet, dass** das Detektorelement (40) mindestens ein Elektrodenpaar (40a, 40b) umfasst und mit der Flüssigkeit (36) zusammenwirkt, wenn sich diese in dem geschlossenen Rauminhalt (24, 26) verlagert, derart, dass der elektrische Schaltkreis geschlossen ist, wenn die Flüssigkeit (36) an dem Detektorelement (40) vorbeikommt.

2. Drucksensor (22) nach Anspruch 1, **dadurch gekennzeichnet, dass** der geschlossene Rauminhalt (24, 26) einen einen Vorratsbehälter (24) bildenden ersten Teil und einen eine Kapillare (26) bildenden zweiten Teil umfasst, und die Flüssigkeit (36) bei Abwesenheit eines Drucks in dem Vorratsbehälter (24) enthalten ist und sich unter Druckeinwirkung von dem Vorratsbehälter (24) in die Kapillare (26) verlagert.

3. Drucksensor (22) nach Anspruch 2, wobei das mindestens eine Detektorelement (40) längs der Kapillare (26) angeordnet ist.

4. Drucksensor (30) nach Anspruch 2 oder 3, wobei der Vorratsbehälter (24) und die Kapillare (26) in einer im Wesentlichen kreisförmigen Richtung aufeinander folgen.

5. Drucksensor (22) nach einem der Ansprüche 2 bis 4, **dadurch gekennzeichnet, dass** er mehrere Detektorelemente (40) umfasst, die längs der Kapillare (26) in bestimmten Abständen zueinander angeordnet sind.

6. Drucksensor (22) nach einem der Ansprüche 1 bis 5, wobei jedes Detektorelement (40) ein in derselben Ebene angeordnetes Elektrodenpaar (40a, 40b) umfasst.

7. Drucksensor (22) nach einem der Ansprüche 1 bis 6, **dadurch gekennzeichnet, dass** er ferner ein erstes Substrat (8a, 74) und ein zweites Substrat (8b, 76), die übereinander angeordnet sind, und einen Dichtungsrahmen (28, 78) umfasst, der das erste und das zweite Substrat (8) verbindet, um zwischen ihnen den geschlossenen Rauminhalt zu definieren.

8. Drucksensor (22) nach Anspruch 7, **dadurch gekennzeichnet, dass** jedes Detektorelement (40) von dem einen oder dem anderen der Substrate (8a, 8b, 74, 76) getragen wird.

9. Drucksensor (22) nach Anspruch 8, **dadurch gekennzeichnet, dass** alle Detektorelemente (40) vom selben Substrat (8b, 76) getragen werden.

10. Drucksensor (22) nach einem der Ansprüche 1 bis 9, **dadurch gekennzeichnet, dass** die Erfassungs- und Umwandlungsmittel (40) ferner eine elektrische Bahn umfassen, die dazu bestimmt ist, mit dem Detektorelement (40) und der Flüssigkeit (36) zusammenzuwirken.

11. Drucksensor (22) nach einem der Ansprüche 1 bis 10, **dadurch gekennzeichnet, dass** das obere Substrat (8a) eine geringere Dicke als das untere Substrat (8b) besitzt, derart, dass das obere Substrat unter Druckeinwirkung empfindlicher ist.

12. Druckmessvorrichtung (100), **dadurch gekennzeichnet, dass** sie einen Drucksensor (30) nach einem der Ansprüche 1 bis 11 umfasst.

13. Druckmessvorrichtung (100) nach Anspruch 12, **dadurch gekennzeichnet, dass** sie ferner umfasst:
- eine Anzeigevorrichtung (20),
- einen elektrischen Schaltkreis (38) mit einer Steuerschnittstellenschaltung der Anzeigevorrichtung, die dazu bestimmt ist, das elektrische Signal bezüglich des Drucks zu empfangen und es an die Anzeigevorrichtung (20) zu übertragen, und
- mindestens eine Versorgungsquelle des elektrischen Schaltkreises.

14. Uhr (2), **dadurch gekennzeichnet, dass** sie eine Druckmessvorrichtung (100) nach einem der Ansprüche 10 bis 13 umfasst.

15. Uhr (2) nach Anspruch 14, wobei die Uhr mit einem Uhrenglas (18) versehen ist, in das der Drucksensor (30) integriert ist.

16. Uhr (2) nach Anspruch 15, **dadurch gekennzeichnet, dass** das Uhrenglas eines der Substrate des Drucksensors bildet.

17. Drucksensor (2) nach Anspruch 14, wobei die Uhr mit einer Lünette versehen ist, in der der Drucksensor (22) aufgenommen (70) ist.

18. Uhr (2) nach einem der Ansprüche 14 bis 17, **dadurch gekennzeichnet, dass** die Anzeigevorrichtung eine Displaydarstellung und/oder eine Vibrationseinrichtung und/oder einen Tongenerator und/oder einen Lichtgenerator umfasst.

## Claims

1. Pressure sensor (22) including means (40) of sensing pressure and converting pressure into an electrical signal able to be transmitted by an electrical circuit to an control interface circuit of an indicator device, **characterized in that** said sensing and conversion means (40) include:
- a closed volume (24, 26) and a liquid (36) contained in the closed volume, said liquid (36) being electrically conductive and capable of moving inside said closed volume (24, 26),
- at least one sensing member (40) arranged inside the closed volume (24, 26) in a given position in said volume, **characterized in that** said sensing member (40) including at least one pair of electrodes (40a, 40b) and cooperating with the liquid (36) when said liquid moves in the closed volume, (24, 26) so that said electrical circuit is closed when the liquid (36) passes said sensing member (40).

2. Pressure sensor (22) according to claim 1, **characterized in that** the closed volume (24, 26) includes a first part forming a tank (24) and a second part forming a capillary tube (26), the liquid (36) being contained in the tank (24) in the absence of pressure and moving from the tank (24) into the capillary tube (26) under the effect of pressure.

3. Pressure sensor (22) according to claim 2, wherein said at least one sensing member (40) is arranged along the capillary tube (22).

4. Pressure sensor (30) according to claim 2 or 3, wherein the tank (24) and the capillary tube (26) are arranged in series in a substantially circular direction.

5. Pressure sensor (22) according to any of claims 2 to 4, **characterized in that** the sensor includes several sensing members (40) arranged in series along the capillary tube (26) at determined distances from each other.

6. Pressure sensor (22) according to any of claims 1 to 5, wherein each sensing member (40) includes a pair of electrodes (40a, 40b) arranged in the same plane.

7. Pressure sensor (22) according to any of claims 1 to 6, **characterized in that** the sensor also includes a first substrate (8a, 74) and a second substrate (8b, 76) which are superposed, a sealing frame (28, 78) joining the first and second substrates (8) to define therebetween said closed volume.

8. Pressure sensor (22) according to claim 7, **characterized in that** each sensing member (40) is carried by one or other of said substrates (8a, 8b, 74, 76).

9. Pressure sensor (22) according to claim 8, **characterized in that** all of the sensing members (40) are carried by the same substrate (8b, 76).

10. Pressure sensor (22) according to any of claims 1 to 9, **characterized in that** said sensing and conversion means (40) also include an electrical path intended to cooperate with said sensing member (40) and said liquid (36).

11. Pressure sensor (22) according to any of claims 1 to 10, **characterized in that** the upper substrate (8a) has a smaller thickness than the lower substrate (8b) so that the upper substrate is more sensitive when exposed to pressure.

12. Pressure measuring apparatus (100) **characterized in that** the apparatus includes a pressure sensor (30) according to any of claims 1 to 11.

13. Pressure measuring apparatus (100) according to claim 12, **characterized in that** the apparatus also includes:
- an indicator device (20),
- an electrical circuit (38) including a control interface circuit for said indicator device intended to receive said pressure-related electrical signal and to re-transmit said signal to said indicator device (20), and
- at least one power source for said electrical circuit.

14. Timepiece (2) **characterized in that** the timepiece includes at least one pressure measuring apparatus (100) according to any of claims 10 to 13.

15. Timepiece (2) according to claim 14, said timepiece being provided with a crystal (18) in which said pressure sensor (30) is integrated.

16. Timepiece (2) according to claim 15, **characterized in that** said crystal forms one of the substrates of said pressure sensor.

17. Timepiece (2) according to claim 14, said timepiece being provided with a bezel (70) housing said pressure sensor (22).

18. Timepiece (2) according to any of claims 14 to 17, **characterized in that** said indicator device includes a display screen and/or a vibrator device and/or an acoustic generator and/or a light generator.
